# EUROPEAN PATENT SPECIFICATION

(11) **EP 4 336 021 B1**
(45) Date of publication and mention of the grant of the patent: **09.04.2025**
(21) Application number: 22195006.6
(22) Date of filing: 12.09.2022
(51) Int. Cl.: F01M 13/04, B01D 45/14, B04B 5/12

(54) **CRANKCASE GAS SEPARATOR**
KURBELGEHÄUSEGASABSCHEIDER
SÉPARATEUR DE GAZ DE CARTER

(43) Date of publication of application: 13.03.2024
(73) Proprietor: Alfdex AB, 261 24 Landskrona (SE)
(72) Inventor: POGÉN, Mats-Örjan, 268 74 BILLEBERGA (SE)
(74) Representative: Alfa Laval Attorneys

(56) References cited:
- EP-A1- 2 522 431
- DE-U1- 202007 009 913
- US-A1- 2011 247 309
- US-A1- 2012 174 541
- US-A1- 2019 316 501
- US-B2- 6 640 792

## Description

### TECHNICAL FIELD

The invention relates to a crankcase gas separator.

### BACKGROUND

Crankcase gas is ventilated from a crankcase of an internal combustion engine, ICE. The crankcase gas is the result of the high pressure within the cylinders of the ICE forcing some of the combustion gas and liquid and solid residues past the piston rings down into the crankcase of the ICE. If not ventilated, an increased pressure within the crankcase may impede ICE operation, may cause engine oil to leak out of the ICE, and/or may cause the liquid and solid residues to contaminate and/or dilute the engine lubricating oil.

Ventilated crankcase gas may be disposed of in an environmentally friendly manner instead of being ventilated in untreated form to the atmosphere. For certain types of combustion engines, legislation requires crankcase gas to be disposed of in an environmentally friendly manner.

Crankcase gas comprises combustion gas, oil, other liquid hydrocarbons, soot, and other solid combustion residues. In order to dispose of crankcase gas suitably, the gas is separated from oil, soot, and other residues. The separated gas may be led to an air intake of the combustion engine or vented to the atmosphere, and the oil may be led back to an oil sump of the combustion engine optionally, via an oil filter for removing soot and other solid residues from the oil.

A separator may be utilised for disposing of crankcase gas. In the separator, the crankcase gas is separated into heavy constituents of the crankcase gas, such as oil and soot, and into a cleaned gaseous phase. Depending on the type of separator used, the heavy constituents are collected in the separator or led out of the separator via an outlet. The gaseous phase is lead out of the separator via a gas outlet and may be directed to an air intake of the ICE.

A pressure at the air intake of the ICE is commonly sub-atmospheric e.g., due to a turbocharger of the ICE rotating at high speed to compress air that has been drawn into the ICE. This sub-atmospheric pressure thus, also prevails at the gas outlet of the crankcase gas separator connected to the air intake. A gas pressure regulating valve may be arranged at the gas outlet in order to prevent too large a sub-atmospheric pressure from propagating through the crankcase gas separator to the crankcase of the relevant ICE, which is not desirable.

On the other hand, when the turbocharger is not rotating or only rotating at low speed, it does not build up any sub-atmospheric pressure that could propagate through crankcase gas separator.

There are different kinds of crankcase gas separators. One way of classifying crankcase gas separators may be as a passive kind and an active kind.

In the passive kind of crankcase gas separator, the overpressure of the crankcase i.e., an above atmospheric pressure at the inlet of the crankcase gas separator, and the sub-atmospheric pressure at the gas outlet of the crankcase gas separator transport the gas through the separator. Put differently, in the crankcase gas separator itself there is not supplied any energy to the crankcase gas flowing through the separator.

The passive kind of crankcase gas separator may rely on a filter element, such as a mesh filter and/or on directional changes of the gas flow through the crankcase gas separator for separating the heavy constituents from the crankcase gas.

Under ICE operating conditions when the turbocharger does not build up any sub-atmospheric pressure, the crankcase gas separator of the passive kind does not contribute to drawing crankcase gas from the relevant ICE. Instead, the overpressure produced in the crankcase of the ICE forms the only means of directing the crankcase gas through the separator. This may not always be sufficient to relieve the crankcase gas from its heavy constituents.

In the active kind of crankcase gas separator, energy is supplied in the separator to the crankcase gas flowing therethrough. Thus, also under ICE operating conditions when the turbocharger does not build up any sub-atmospheric pressure, crankcase gas is drawn from the relevant ICE by the crankcase gas separator and relieved of its heavy constituents therein.

One type of active crankcase gas separator comprises a rotor that is actively driven to rotate. The rotation creates a centrifugal force acting on the heavy constituents of the crankcase gas thus, facilitating and/or improving separation thereof. Moreover, the rotor has a pumping effect i.e., a pressure increasing effect, on the crankcase gas and cleaned gas passing through crankcase gas separator.

Accordingly, since the crankcase gas separator of the passive type relies on gas pressure external of the separator and the pressure drop over the separator for separation of the heavy constituents, and since the crankcase gas separator of the active type is driven to separate the heavy constituents - the pressure distribution within the respective separator type, the pressure drop over the respective separator type, and the gas flow conditions within the respective separator type are distinctly different in the passive type of crankcase gas separator and the active type of the crankcase gas separator.

Therefore, any valve operating to control a gas flow through a separator of the passive type has distinctly different operating conditions than a valve of a separator of the active type. Inter alia, the valve of a separator of the passive type must ensure a sufficient passage of gas to enable separation of the heavy constituents, whereas a valve of a separator of the active type must be adapted to operate with the pressure increase caused by the rotor.

For instance, US 7704300, WO 2010/051994 and US2019/316501 show crankcase gas separators of the active type, wherein the gas outlet is provided with a gas pressure regulating valve adapted to operate under pressure increasing conditions caused by a rotor of the relevant separator

### SUMMARY

Increased efficiency in internal combustion engines is an aim in the development of such engines. Put differently, a reduction in energy consumption of the engine including its auxiliary components such as an active crankcase gas separator, is desirable.

Accordingly, it would be desirable to provide a crankcase gas separator comprising a rotor, which crankcase gas separator has a lower energy consumption than any of the crankcase gas separators disclosed in US 7704300 or WO 2010/051994. To better address one or more of these concerns, a crankcase gas separator having the features defined in the independent claim is provided.

According to an aspect of the invention, there is provided a crankcase gas separator comprising a separator housing delimiting at least part of a separation space, a rotor arranged in the separation space, a gas outlet passage from the separation space, and a gas pressure regulating valve arranged in fluid communication with the gas outlet passage, wherein the gas pressure regulating valve comprises a valve seat and a membrane configured to seal against the valve seat and provides a flow direction for gas from the gas outlet passage through the gas pressure regulating valve, and wherein in relation to the flow direction, the membrane is arranged downstream of the valve seat.

Since in relation to the flow direction, the membrane is arranged downstream of the valve seat, a lower pressure drop prevails over the gas pressure regulating valve when the valve is open than in a regulating valve of the kind shown in US 7704300 and WO 2010/051994, each of which has the membrane arranged upstream of the valve seat.

Since the pumping of the crankcase gas and the cleaned gas, actuated by the rotating rotor, is operating against this lower pressure drop over the regulating valve, less energy is required for pumping the gas out of the crankcase gas separator than in a crankcase gas separator having a valve with its membrane arranged upstream of the valve seat. Thus, less energy is consumed by the present crankcase gas separator and accordingly, also by the internal combustion engine comprising the crankcase gas separator.

Moreover, in a regulating valve of the kind shown in US 7704300 and WO 2010/051994, with the membrane arranged upstream of the valve seat, a small valve seat is required in order to provide a desirable even valve characteristic. A small valve seat produces higher pressure drop than a larger valve seat.

It has been realised by the inventor that, in the present gas pressure regulating valve, with the membrane arranged downstream of the valve seat, the situation is the opposite, a large valve seat is required in order to provide the desirable even valve characteristic. Thus, the even valve characteristic is provided in a valve with a low pressure drop, in comparison with the small valve seat in a regulating valve of the kind shown in US 7704300 and WO 2010/051994.

In this context a large valve seat may be defined as a valve seat having a through flow area within a range of 2 x Amin to 5 x Aclose. The through flow area of the valve seat may be seen perpendicularly to the valve seat. Amin is the smallest cross-sectional area for the gas to pass in the separator. Depending on the separator, Amin may be at a crankcase gas inlet of the separator, the total area of the interspaces between the separation aids at the centre of the rotor, the gas outlet passage upstream of the gas pressure regulating valve, etc. Aclose is the closing area of the membrane i.e., the area of the membrane outside the valve seat, see further below.

The crankcase gas separator is arranged for cleaning crankcase gas from an internal combustion engine, ICE. Such an ICE may be configured for propelling a vehicle, a vessel, or may be a stationary combustion engine, for instance for driving a generator for generating an electrical current.

The crankcase gas separator is configured to separate heavy constituents of the crankcase gas as a liquid phase from a gaseous phase. Accordingly, the liquid phase may comprise one or more of oil, other liquid hydrocarbons, soot, and other solid combustion residues.

The crankcase gas, also referred to as blow-by gas, may be ventilated from the crankcase of the ICE via a crankcase ventilation system. The centrifugal separator may form part of the crankcase ventilation system.

In the separation space and the rotor of the crankcase gas separator, the crankcase gas is separated into the liquid phase and the gaseous phase.

The crankcase gas separator is a centrifugal separator since it comprises the rotor arranged in the separation space. The rotor may be connected to a rotor shaft, which is journalled in the separator housing and arranged to be rotated about a rotational axis.

If not otherwise stated, axial and radial references and directions used herein are defined in relation to the rotational axis of the rotor.

Herein, the crankcase gas separator may alternatively be referred to simply as separator, or as centrifugal separator. The gas pressure regulating valve may alternatively be referred to as, the pressure regulating valve, the regulating valve, or as the valve.

The separator comprises an inlet for the crankcase gas. The inlet is arranged in fluid communication with the separation space. Also the gas outlet passage is arranged in fluid communication with the separation space. The gas outlet passage forms part of a gas outlet for the gaseous phase separated in the separator. The crankcase gas separator comprises a liquid outlet for the liquid phase separated in the separator. Also the liquid outlet is arranged in fluid communication with the separation space.

In operation of the centrifugal separator, crankcase gas is led into the separation space and the rotor via the inlet for the crankcase gas. The crankcase gas enters the rotor from a central portion thereof. As the rotor rotates, the heavy constituents are separated therein and are propelled from an outer periphery of the rotor as droplets against a circumferential inner wall surface of the separator housing. The droplets form the separated liquid phase which is led out of the centrifugal separator via the liquid outlet. The gaseous phase i.e., the crankcase gas relieved of its heavy constituents, is led out of the centrifugal separator via the gas outlet passage and the gas pressure regulating valve.

The rotation of the rotor has a pumping effect on the crankcase gas and the gaseous phase, which increases a gas pressure between the inlet for crankcase gas and the gas outlet passage.

The centrifugal separator may be configured for concurrent separation. That is, the two separated phases travel in the same direction through the rotor of the centrifugal separator. More specifically, as discussed above, the liquid phase travels from within the rotor towards its periphery. Similarly, the gaseous phase is formed as the crankcase gas is separated from the heavy constituents while traveling from the central portion of the rotor towards its periphery. Thus, both the liquid phase and the gaseous phase exit the rotor at its periphery.

The rotor may comprise a separation aid e.g., a number of separating members, which improve the separation of the heavy constituents from the crankcase gas. The separation aid may comprise separating members in the form of e.g., axially extending vanes which are directed radially from the rotor shaft or axially stacked frustoconical separation discs. As the rotor rotates, the heavy constituents are forced against radially inwardly facing surfaces of the separating members, forming thereon droplets of the liquid phase and flowing towards the periphery of the rotor.

The separator housing is stationary in relation to the ICE. The rotor shaft and the rotor are arranged to rotate in relation to the separator housing. The rotor shaft may be rotated by a driving member, such as a turbine wheel, an electric, pneumatic, or hydraulic motor, etc.

The gas pressure regulating valve is configured to regulate a gas pressure within the separation space. For instance, the pressure regulating valve may ensure that a minimum pressure level within the separation space does not drop below a minimum pressure level. That is, below the minimum pressure level, the pressure regulating valve may close the gas outlet passage and above the minimum pressure level, the pressure regulating valve may open the gas outlet passage.

The gas outlet passage may extend at least upstream of the valve seat i.e., forming at least a portion of a flow path between the separation space and the valve seat.

The membrane being configured to abut and/or seal against the valve seat herein, does not necessarily mean a gas tight seal but refers to at least a portion of the membrane abutting against a portion of the valve seat. Accordingly, the abutment and/or seal achieved may reduce the gas passage to a lesser or larger extent.

For instance, the membrane generally, may extend substantially perpendicularly to a plane including the valve seat e.g., a plane of an abutment area of the membrane may extend within a range of 0 - 5 degrees to the plane including the valve seat. For instance, if there is an angle between the two planes, the membrane will abut gradually against the valve seat as a pressure difference over the valve seat increases, with the lower pressure being on the downstream side of the regulating valve.

The terms upstream and downstream refer to a direction or position seen along a flow direction i.e., upstream is closer to a source of the flow and downstream is farther from the source of the flow. In the present case, according to the invention the membrane being arranged downstream of the valve seat means that a component of the gas flowing through the pressure regulating valve will reach the valve seat before reaching the membrane.

The expression "a flow direction for gas from the gas outlet passage through the gas pressure regulating valve" refers generally to the flow direction through the regulating valve, from its inlet to its outlet. Accordingly, along this flow direction, the physical path of the gas flowing through the regulating valve may change direction one or more times.

A spring or other resilient member may be arranged to interact with the membrane in order to provide desired opening and/or closing characteristics of the valve
According to embodiments, seen perpendicularly to a plane including the valve seat, a gas throughflow area within the valve seat, and an area of the membrane outside the valve seat may have a ratio within a range of 1 : 1.25 to 1 : 5. In this manner, a smooth valve characteristic may be provided.

Also, within this range a characteristic of the regulating valve may be achieved that closes the present valve with the membrane arranged downstream of the valve seat to prevent too low a pressure downstream of the valve from propagating through the valve and the separator.

The gas throughflow area within the valve seat or more specifically, its projected area on the membrane, acts as a valve/membrane opening area. The area of the membrane outside the valve seat i.e., an area having a ring-shape in the case of a substantially circular membrane, acts as a valve/membrane closing area.

According to embodiments, seen perpendicularly to a general plane of the membrane, a centre of the membrane may be offset from a centre of the valve seat. In this manner, pressure drop characteristics of the regulating valve may be adaptable in response to physical positioning of components of the regulating valve. For instance, in relation to as gas outlet conduit for the gaseous phase of the regulating valve, which conduit is arranged downstream of the membrane.

The general plane of the membrane is a flat plane extending in parallel with a widest portion of the membrane.

According to embodiments, the centre of the membrane may be offset from the centre of the valve seat towards the gas outlet conduit. In this manner, low pressure drop, in comparison with a membrane that is centred in relation to the valve seat, may be provided.

According to embodiments, a plane including the valve seat and a plane of an abutment area of the membrane configured to abut against the valve seat, may be arranged at an angle to each other. In this manner, oscillating vibrations in the membrane and/or oscillating closing and opening movements of the membrane against the valve seat may be avoided since the membrane may gradually come into contact with the entire valve seat.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:
Fig. 1 schematically illustrates a cross section through a crankcase gas separator according to embodiments,
Fig. 2 schematically illustrates a cross section through a portion of the crankcase gas separator shown in Fig. 1, and
Figs. 3a and 3b schematically illustrate embodiments of a gas pressure regulating valve of a crankcase gas separator.

### DETAILED DESCRIPTION

Aspects and/or embodiments of the invention will now be described more fully. Like numbers refer to like elements throughout. Well-known functions or constructions will not necessarily be described in detail for brevity and/or clarity.

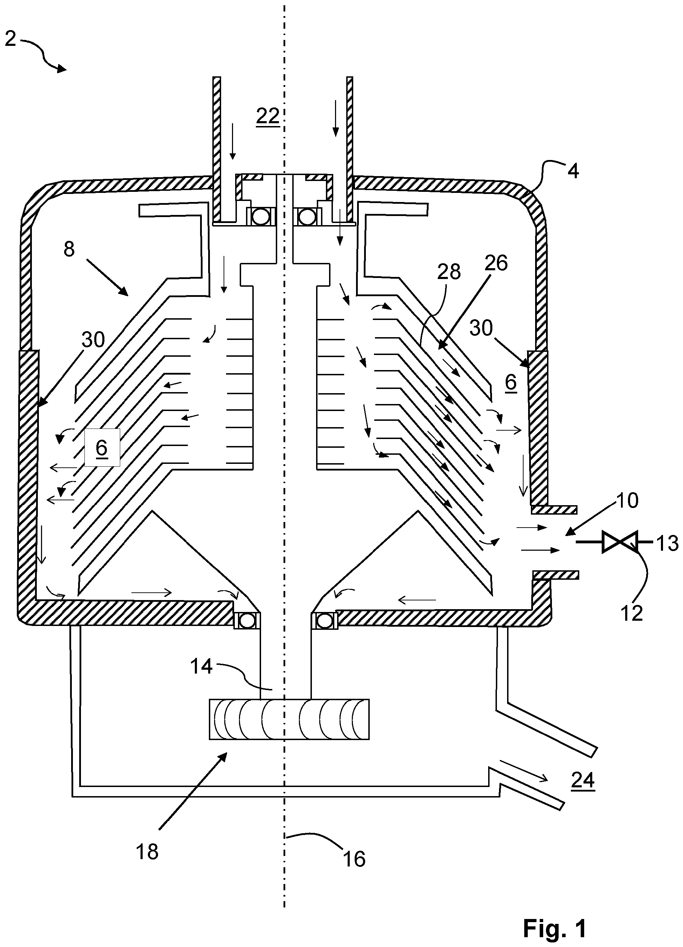

Fig. 1 schematically illustrates a cross section through a crankcase gas separator 2 according to embodiments.

The separator 2 is a centrifugal separator. The separator 2 is configured for separating a liquid phase and a gaseous phase from a crankcase gas coming from an internal combustion engine, ICE.

The separator 2 comprises a separator housing 4 delimiting at least part of a separation space 6 and a rotor 8 arranged in the separation space 6. During use of the separator 2, the crankcase gas is separated into the liquid phase and the gaseous phase in the rotor 8.

The separator 2 further comprises a gas outlet passage 10 from the separation space 6 and a gas pressure regulating valve 12 arranged in fluid communication with the gas outlet passage 10.

The gas outlet passage 10 is configured for leading a separated gaseous phase out of the separation space 6 and towards the valve 12. Accordingly, the separation space 6 is arranged in fluid communication with the regulating valve 12 via the gas outlet passage 10.

Downstream of the regulating valve 12, there is provided a gas outlet 13 for the gaseous phase from the separator 2. The gas outlet 13 may be connected to an air intake of the relevant ICE, upstream of its turbocharger.

The gas pressure regulating valve 12 is schematically indicated in Fig. 1. The valve 12 may be a biased valve configured to open when a predetermined minimum gas pressure level prevails in the separation space 6. Thus, the valve 12 ensures that the gas pressure within the separation space 6 is above the predetermined minimum gas pressure level. The valve 12 prevents too low a pressure, connected to the gas outlet 13 of the valve 12 from drawing excessive amounts of crankcase gas from a relevant ICE through the separator 2.

A rotor shaft 14 extends through the separation space 6 in an axial direction. The rotor 8 is connected to the rotor shaft 14. The rotor 8 and the rotor shaft 14 are arranged to rotate about a rotational axis 16.

The rotor shaft 14 is brought to rotate about the rotational axis 16 by a driving member 18. In the embodiments illustrated in Fig.1, the driving member 18 is a turbine wheel connected to the rotor shaft 14. The turbine wheel is driven by a stream of oil, such as engine lubricating oil, directed against the turbine wheel.

The rotor shaft 14 is journalled in the separator housing 4. The rotor shaft 14 may be journaled e.g., in ball bearings, roller bearings, or plain bearings.

In the illustrated embodiments, an operating position of the separator 2 is shown with a vertical orientation of the rotational axis 16. In alternative embodiments, the operating position may be with a horizontal orientation of the rotational axis or with an orientation in between a vertical and horizontal orientation.

Suitably, the separator 2 further comprises an inlet 22 into the separation space 6 for the crankcase gas and a liquid outlet 24 for the separated liquid phase.

In Fig. 1, the separated liquid phase flows from the separation space 6 through the lower bearing to the liquid outlet 24. Additionally or alternatively, other flow paths for the liquid phase from the separation space 6 to the liquid outlet 24 may be provided.

The rotor 8 comprises a separation aid in the form of a stack 26 of separation discs 28, each separation disc 28 having a frustoconical, shape. Between the separation discs 28 in the stack 26, interspaces are formed through which the crankcase gas travels from an inner periphery towards an outer periphery while being separated into the liquid phase and the gaseous phases as the rotor 8 rotates. In Fig. 1 only some of the separation discs 28 are indicated.

In these embodiments the frustoconical separation discs 28 are stacked with their wide ends facing downwardly. In alternative embodiments, the frustoconical separation discs may be stacked with their wide ends facing upwardly.

In alternative embodiments, other types of separation aids may be utilised, such as e.g. axially extending vanes projecting radially outwardly from the rotor shaft.

The centrifugal separator 2 is configured for concurrent separation. During use of the separator 2, the crankcase gas enters the rotor 8 from a central portion thereof. As the rotor 8 rotates, the heavy constituents are separated therein and are propelled from an outer periphery of the rotor 8 as droplets against a circumferential inner wall surface 30, which extends circumferentially around the rotor 8 and may form part of the housing 4.

When, as illustrated, the separator 2 is configured to be positioned with the rotational axis 16 extending substantially vertically during use of the separator 2, the liquid outlet 24 is arranged at a lower end of the housing 4. The separated liquid phase may thus, be transported by gravity towards the liquid outlet 24.

If the separator, during use, is configured for a different orientation suitably, the liquid outlet is arranged at a lower end of the housing in the relevant orientation.

The flow of crankcase gas, gaseous phase, and liquid phase through the separator 2 is indicated with small arrows in Fig. 1.

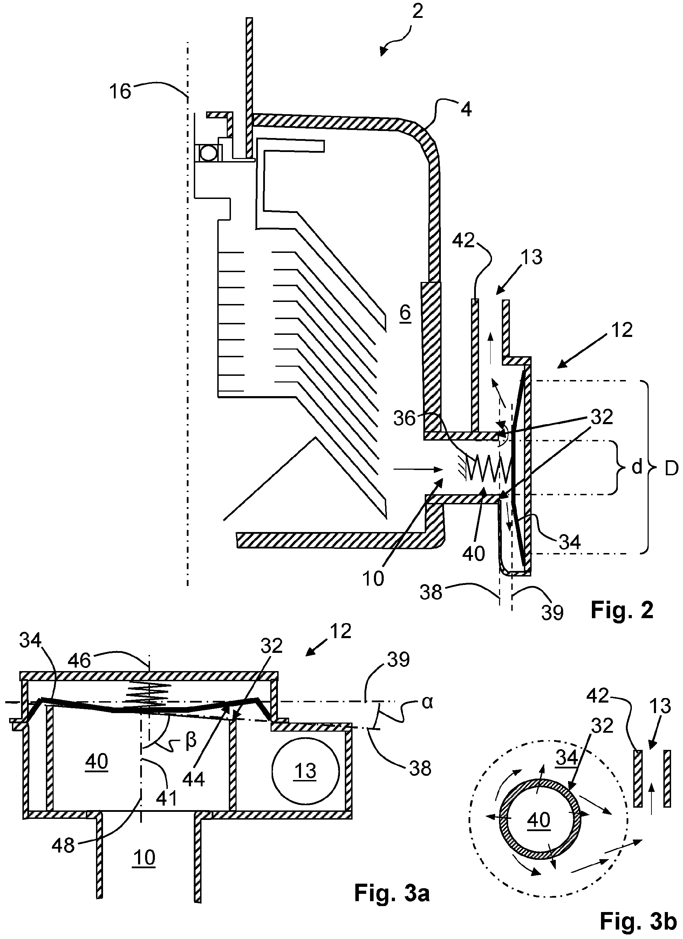

Fig. 2 schematically illustrates a cross section through a portion of the crankcase gas separator 2 shown in Fig. 1. In Fig. 2 the gas pressure regulating valve 12 is shown in more detail. In the following reference is also made to Fig. 1.

The gas pressure regulating valve 12 comprises a valve seat 32 and a membrane 34 configured to seal against the valve seat 32. The regulating valve 12 provides a flow direction for gas from the gas outlet passage 10 through the gas pressure regulating valve 12. The flow direction for gas from the gas outlet passage 10 through the regulating valve 12 and to the gas outlet 13 of the separator 2 is indicated with arrows in Fig. 2. Accordingly, the gas outlet 13 of the separator 2 is arranged downstream of the membrane 34.

In relation to the flow direction for gas from the gas outlet passage 10, the membrane 34 is arranged downstream of the valve seat 32.

The regulating valve 12 is arranged to regulate a pressure within the separation space 6 of the separator 2. A relative high pressure within the separation space 6 acts via the gas outlet passage 10 on a central portion of the membrane 34 to separate the membrane 34 from the valve seat 32 in order to open the valve 12. A relative low pressure connected to the gas outlet 13 of the separator 2 acts on a peripheral portion of the membrane 34 to seal the membrane 34 against the valve seat 32 in order to close the valve 12.

Mentioned purely as an example, at least a portion of the membrane 34 may be made from an elastomer, such a thermoplastic elastomer, natural rubber, or synthetic rubber.

Seen perpendicularly to a plane 38 including the valve seat 32, a gas throughflow area within the valve seat 32 and an area of the membrane 34 outside the valve seat 32 may have a ratio within a range of 1 : 1.25 to 1 : 5. The plane 38 including the valve seat 32 is indicated with a broken line 38 in Fig. 2.

Mentioned as an example, in case of a circular valve seat 32 with a throughflow area having a diameter, d, and a circular membrane 34 having a diameter, D, the above mentioned ratio may be expressed as: 1 : (D x D /4 - d x d /4) / (d x d / 4).

The membrane 34 generally, may extend substantially in parallel with the plane 38 including the valve seat 32. For instance, an abutment plane 39 of the membrane 34 configured to abut against the valve seat 32 may extend within a range of 0 - 5 degrees to the plane 38 including the valve seat 32.

The abutment plane 39 of the membrane 34 is a plane of an abutment area of the membrane 34 configured to abut against the valve seat 32. The abutment plane 39 of the membrane 34 is indicated with a broken line 39 in Fig. 2.

The gas pressure regulating valve 12 further comprises a biasing member 36 arranged to bias the membrane 34 in a direction away from the valve seat 32. In this manner, temperature dependency of the membrane characteristics may be evened out or at least reduced. Namely, in this manner, the physical properties of the membrane 34 and the biasing member 36, together, determine the characteristics of the valve 12.

In the illustrated embodiments, the biasing member 36 is schematically illustrated as a compression spring. That is, when the membrane 34 moves towards the valve seat 32 the compression spring is compressed by the membrane 34. The spring force urging the compression spring to return to its initial length biases the membrane 34 in the direction away from the valve seat 32.

Any alternative other suitable element may be utilised as biasing member 36.

The biasing member 36 biases the membrane 34 into an open position permitting the gaseous phase to flow through the valve 12, as shown in **Fig. 2****.** If however, a pressure downstream of the membrane 34 i.e., at the gas outlet 13, is at such a low level that its resulting force affecting the membrane 34 exceeds a total force of the biasing member 36, the force of the inherent resilience of the membrane 34, and the force caused by the pressure affecting the membrane 34 upstream of the valve seat 32, the valve 12 will close. The valve 12 will open again once the pressure difference between upstream and downstream the valve seat 32 is such that the total force of the biasing member 36, the force of the inherent resilience of the membrane 34, and the force caused by the pressure affecting the membrane 34 upstream of the valve seat 32 causes the membrane 34 to move away from the valve seat 32.

According to some embodiments such as the illustrated embodiments, the gas outlet passage 10 from the separation space 6 may be connected to an inlet passage 40 of the gas pressure regulating valve 12, wherein the inlet passage 40 leads to the valve seat 32. In this manner, the gas outlet passage 10 from the separation space 6 may transition into the inlet passage 40 of the gas pressure regulating valve 12.

According to embodiments such as the illustrated embodiments, the inlet passage 40 of the gas pressure regulating valve 12 may extend substantially perpendicularly to the plane 38 including the valve seat 32. In this manner, the regulating valve 12 may be adapted to being positioned with the plane 38 of the valve seat 32 extending substantially tangentially with the separation space 6. This in turn, provides for a compact separator 2 since also the membrane 34 thus, may be positioned to extend substantially tangentially with the separation space 6. Accordingly, in this manner, the valve 12 may be designed for being arranged close to the housing 4 of the separator 2.

According to embodiments such as the illustrated embodiments, a valve closing motion of the membrane 34 may be in a direction opposite to a direction of gas flowing into the gas pressure regulating valve 12. This arrangement is a consequence of the membrane 34 being arranged downstream of the valve seat 32.

The direction of gas flowing into the gas pressure regulating valve 12 is provided by the inlet passage 40 of the regulating valve 12 being directed towards the membrane 34.

The direction of gas flowing into the regulating valve 12 has one physical direction as it flows through the inlet passage 40 of the regulating valve 12 to its valve seat 32.

According to embodiments such as the illustrated embodiments, the gas pressure regulating valve 12 may comprise a gas outlet conduit 42 downstream of the membrane 34, wherein the gas outlet conduit 42 may extend substantially in parallel with the membrane 34. In this manner, a compact separator 2 may be provided since the gas outlet conduit 42 may be arranged to be directed in parallel with a tangent of the separation space 6 and the housing 4 of the separator 2.

Depending on the relevant ICE, in relation to which the separator 2 is to be mounted, the gas outlet conduit 42 may be arranged to point in a suitable direction while extending substantially in parallel with the membrane 34.

Further conduits (not shown) leading from the gas outlet conduit 42 to e.g., a turbocharger of the relevant ICE may have to be directed away from separator 2 in order to reach the turbocharger. However, the gas outlet conduit 42 extending substantially in parallel with the membrane 34 provides for the separator 2 to be easily positioned in relation to the ICE.

The expression "substantially in parallel with the membrane 34" may in this context be e.g., within a range of -10 to 10 degrees of a plane of the membrane 34, such as the indicated abutment plane 39 or a general plane of the membrane 34. As mentioned above, a general plane of the membrane 34 is a flat plane extending in parallel with a widest portion of the membrane 34.

**Figs. 3a and 3b** schematically illustrate a gas pressure regulating valve 12 according to embodiments. The regulating valve 12 is a valve of a crankcase gas separator comprising a rotor, such as the separator 2 discussed above with reference to **Figs. 1** **and** **2. Fig. 3a** shows a cross section through the valve 12 and **Fig. 3b** shows a top view of selected elements of the valve 12.

The regulating valve 12 of **Figs. 3a and 3b** resembles in much the regulating valve 12 of **Fig. 2****.** Accordingly, in the following mainly the differences will be discussed.

Again, the valve 12 comprises a valve seat 32 and a membrane 34 configured to seal against the valve seat 32. A gas outlet 13 for the gaseous phase of the relevant crankcase gas separator is arranged downstream of the membrane 34.

Again, the regulating valve 12 provides a flow direction for gas from the gas outlet passage 10 through the gas pressure regulating valve 12. In relation to the flow direction for gas from the gas outlet passage 10, the membrane 34 is arranged downstream of the valve seat 32.

Again, seen perpendicularly to a plane 38 including the valve seat 32, a gas throughflow area within the valve seat 32, and an area of the membrane 34 outside the valve seat 32 has a ratio within a range of 1 : 1.25 to 1 : 5. The plane 38 including the valve seat 32 is indicated with a dash-dotted line 38 in Fig. 3a.

In **Figs. 3a and 3b****,** the valve 12 is shown in an open state and the flow of the separated gaseous phase past the valve seat 32, past the membrane 34, and through the gas outlet 13 for the gaseous phase is indicated with arrows in **Fig. 3b****.**

Again, the valve 12 comprises a biasing member 36 arranged to bias the membrane 34 in a direction away from the valve seat 32.

In these embodiments, the biasing member 36 is schematically illustrated as a tension spring connected to the membrane 34 and a housing member of the valve 12. Accordingly, when the membrane 34 moves towards the valve seat 32 the tension spring is extended by the membrane 34. The spring force urging the tension spring to return to its initial length biases the membrane 34 in the direction away from the valve seat 32.

Again, the gas outlet passage 10 from the separation space 6 may be connected to an inlet passage 40 of the gas pressure regulating valve 12, the inlet passage 40 leading to the valve seat 32.

Again, the inlet passage 40 of the gas pressure regulating valve 12 may extend substantially perpendicularly to the plane 38 including the valve seat 32.

In this context, the expression "substantially perpendicularly to the plane 38 including the valve seat 32" e.g., may relate to a minimum angle β between the plane 38 and a centre line 41 extending along the inlet passage 40 within a range of 90 to 85 degrees.

Again, the gas pressure regulating valve 12 may comprise a gas outlet conduit 42 downstream of the membrane 34, the gas outlet conduit 42 extending substantially in parallel with the membrane 34.

According to the embodiments of **Figs. 3a and 3b****,** seen perpendicularly to a general plane 39 of the membrane 34, a centre 46 of the membrane 34 is offset from a centre 48 of the valve seat 32. In these embodiments, the centre 46 of the membrane 34 is offset from the centre 48 of the valve seat 32 towards the gas outlet conduit 42 and the gas outlet 13.

A pressure drop in the valve 12 may thus be reduced in comparison with a membrane that is centred in relation to the valve seat.

The centre 46 of the membrane 34 and the centre 48 of the valve seat 32 are indicated with lines in **Fig. 3a****.** The centre 48 of the valve seat 32 may coincide with the centre line 41 of the inlet passage 40, as shown in **Fig. 3a****.**

In **Fig. 3a****,** the general plane 39 of the membrane is indicated to coincide with an abutment plane 39 of the membrane 34. Again, the abutment plane 39 of the membrane 34 is a plane 39 of an abutment area 44 of the membrane 34 configured to abut against the valve seat 32.

If the valve seat 32 has a generally circular shape, then also the abutment area 44 has a generally circular shape.

According to the embodiments of **Figs. 3a and 3b****,** the plane 38 including the valve seat 32 and the plane 39 of the abutment area 44 of the membrane 34 are arranged at an angle α to each other.

For instance, the plane 39 of the abutment area 44 i.e., the abutment plane 39, may extend within a range of 0.25 - 10 degrees to the plane 38 including the valve seat 32.

The arrangement of the two planes 38, 49 at the angle α may prevent vibrations in the membrane 34 and/or oscillating closing and opening movements of the membrane 34 against the valve seat 32. Namely, as the membrane 34 moves into abutment with the valve seat 32, the abutment area 44 of the membrane 34 will gradually come into contact with the valve seat 32. That is, at first a contact area between abutment area 44 of the membrane 34 and the valve seat 32 will be small but if the pressure difference over the valve 12 increases, so will the contact area, until the abutment area 44 of the membrane 34 contacts the entire valve seat 32.

According to alternative embodiments of the valve 12, it may be provided with either the centre 46 of the membrane 34 being offset from a centre 48 of the valve seat 32 or with the plane 38 including the valve seat 32 and the plane 39 of the abutment area 44 of the membrane 34 being arranged at an angle α to each other.

## Claims

1. A crankcase gas separator (2) comprising a separator housing (4) delimiting at least part of a separation space (6),
a rotor (8) arranged in the separation space (6), wherein the rotor (8) comprises a separation aid in the form of a stack (26) of separation discs (28),
a gas outlet passage (10) from the separation space (6), and
a gas pressure regulating valve (12) arranged in fluid communication with the gas outlet passage (10), wherein
the gas pressure regulating valve (12) comprises a valve seat (32) and a membrane (34) configured to seal against the valve seat (32) and provides a flow direction for gas from the gas outlet passage (10) through the gas pressure regulating valve (12), and
**characterized in that**,
in relation to the flow direction, the membrane (34) is arranged downstream of the valve seat (32).

2. A crankcase gas separator (2) according to claim 1, wherein seen perpendicularly to a plane (28) including the valve seat (32), a gas throughflow area within the valve seat (32), and an area of the membrane 34 outside the valve seat (32) may have a ratio within a range of 1 : 1.25 to 1 : 5.

3. A crankcase gas separator (2) according to claim 1 or 2, wherein the gas outlet passage (10) from the separation space (6) is connected to an inlet passage (40) of the gas pressure regulating valve (12), and wherein the inlet passage (40) leads to the valve seat (32).

4. A crankcase gas separator (2) according to claim 3, wherein the inlet passage (40) of the gas pressure regulating valve (12) extends substantially perpendicularly to a plane (38) including the valve seat (32).

5. A crankcase gas separator (2) according to any one of the preceding claims, wherein a valve closing motion of the membrane (34) is in a direction opposite to a direction of gas flowing into the gas pressure regulating valve (12).

6. A crankcase gas separator (2) according to any one of the preceding claims, wherein the gas pressure regulating valve (12) comprises a gas outlet conduit (42) downstream of the membrane (34), and wherein the gas outlet conduit (42) extends substantially in parallel with the membrane (34).

7. A crankcase gas separator (2) according to any one of the preceding claims, wherein seen perpendicularly to a general plane (39) of the membrane (34), a centre (46) of the membrane (34) is offset from a centre (48) of the valve seat (32).

8. A crankcase gas separator (2) according to claims 6 and 7, wherein the centre (46) of the membrane (34) is offset from the centre (48) of the valve seat (32) towards the gas outlet conduit (42).

9. A crankcase gas separator (2) according to any one of the preceding claims, wherein a plane (38) including the valve seat (32) and a plane (39) of an abutment area (44) of the membrane (34) configured to abut against the valve seat (32) are arranged at an angle (α) to each other.

10. A crankcase gas separator (2) according to any one of the preceding claims, wherein the gas pressure regulating valve (12) further comprises a biasing member (36) arranged to bias the membrane (34) in a direction away from the valve seat (32).

## Patentansprüche

1. Kurbelgehäusegasabscheider (2), umfassend ein Abscheidergehäuse (4), das mindestens einen Teil eines Abscheideraumes (6) begrenzt,
einen Rotor (8), der in dem Abscheideraum (6) angeordnet ist, wobei der Rotor (8) ein Abscheidehilfsmittel in Form eines Stapels (26) von Abscheidescheiben (28) umfasst,
einen Gasauslasskanal (10) aus dem Abscheideraum (6) und
ein Gasdruckregelventil (12), das in Fluidverbindung mit dem Gasauslasskanal (10) angeordnet ist, wobei
das Gasdruckregelventil (12) einen Ventilsitz (32) und eine Membran (34) umfasst, die konfiguriert ist, um gegen den Ventilsitz (32) abzudichten, und eine Strömungsrichtung für Gas vom Gasauslasskanal (10) durch das Gasdruckregelventil (12) bereitstellt, und
**dadurch gekennzeichnet, dass**
in Bezug auf die Strömungsrichtung die Membran (34) stromabwärts von dem Ventilsitz (32) angeordnet ist.

2. Kurbelgehäusegasabscheider (2) nach Anspruch 1, wobei, senkrecht zu einer Ebene (28) gesehen, die den Ventilsitz (32) einschließt, eine Gasdurchflussfläche innerhalb des Ventilsitzes (32) und eine Fläche der Membran 34 außerhalb des Ventilsitzes (32) in einem Verhältnis innerhalb eines Bereichs von 1:1,25 bis 1:5 stehen können.

3. Kurbelgehäusegasabscheider (2) nach Anspruch 1 oder 2, wobei der Gasauslasskanal (10) aus dem Abscheideraum (6) mit einem Einlasskanal (40) des Gasdruckregelventils (12) verbunden ist, und wobei der Einlasskanal (40) zum Ventilsitz (32) führt.

4. Kurbelgehäusegasabscheider (2) nach Anspruch 3, wobei der Einlasskanal (40) des Gasdruckregelventils (12) im Wesentlichen senkrecht zu einer Ebene (38) verläuft, die den Ventilsitz (32) einschließt.

5. Kurbelgehäusegasabscheider (2) nach einem der vorstehenden Ansprüche, wobei eine Ventilschließbewegung der Membran (34) in einer Richtung entgegengesetzt zu einer Richtung des in das Gasdruckregelventil (12) strömenden Gases erfolgt.

6. Kurbelgehäusegasabscheider (2) nach einem der vorhergehenden Ansprüche, wobei das Gasdruckregelventil (12) eine Gasauslassleitung (42) stromabwärts der Membran (34) umfasst und wobei die Gasauslassleitung (42) im Wesentlichen parallel zur Membran (34) verläuft.

7. Kurbelgehäusegasabscheider (2) nach einem der vorhergehenden Ansprüche, wobei senkrecht zu einer allgemeinen Ebene (39) der Membran (34) gesehen, ein Mittelpunkt (46) der Membran (34) gegenüber einem Mittelpunkt (48) des Ventilsitzes (32) versetzt ist.

8. Kurbelgehäusegasabscheider (2) nach den Ansprüchen 6 und 7, wobei der Mittelpunkt (46) der Membran (34) von dem Mittelpunkt (48) des Ventilsitzes (32) in Richtung der Gasauslassleitung (42) versetzt ist.

9. Kurbelgehäusegasabscheider (2) nach einem der vorhergehenden Ansprüche, wobei eine Ebene (38), die den Ventilsitz (32) einschließt, und eine Ebene (39) eines Anschlagbereichs (44) der Membran (34), die konfiguriert ist, um gegen den Ventilsitz (32) anzuschlagen, in einem Winkel (α) zueinander angeordnet sind.

10. Kurbelgehäusegasabscheider (2) nach einem der vorhergehenden Ansprüche, wobei das Gasdruckregelventil (12) ferner ein Vorspannelement (36) umfasst, das angeordnet ist, um die Membran (34) in eine Richtung weg vom Ventilsitz (32) vorzuspannen.

## Revendications

1. Séparateur de gaz de carter (2) comprenant un boîtier de séparateur (4) délimitant au moins une partie d'un espace de séparation (6),
un rotor (8) disposé dans l'espace de séparation (6), dans lequel le rotor (8) comprend une aide à la séparation sous la forme d'un empilement (26) de disques de séparation (28),
un passage de sortie de gaz (10) au départ de l'espace de séparation (6), et
une soupape de régulation de la pression de gaz (12) disposée en communication fluidique avec le passage de sortie de gaz (10), dans lequel
la soupape de régulation de la pression de gaz (12) comprend un siège de soupape (32) et une membrane (34) configurée pour garantir l'étanchéité contre le siège de soupape (32) et fournit une direction d'écoulement pour le gaz provenant du passage de sortie de gaz (10) à travers la soupape de régulation de la pression de gaz (12), et
**caractérisé en ce que**
par rapport à la direction d'écoulement, la membrane (34) est disposée en aval du siège de soupape (32).

2. Séparateur de gaz de carter (2) selon la revendication 1, dans lequel, vu perpendiculairement à un plan (28) incluant le siège de soupape (32), une zone d'écoulement de gaz à l'intérieur du siège de soupape (32) et une zone de la membrane 34 à l'extérieur du siège de soupape (32) peuvent avoir un rapport compris dans une plage de 1:1,25 à 1:5.

3. Séparateur de gaz de carter (2) selon la revendication 1 ou 2, dans lequel le passage de sortie de gaz (10) au départ de l'espace de séparation (6) est relié à un passage d'entrée (40) de la soupape de régulation de la pression de gaz (12), et dans lequel le passage d'entrée (40) mène au siège de soupape (32).

4. Séparateur de gaz de carter (2) selon la revendication 3, dans lequel le passage d'entrée (40) de la soupape de régulation de la pression de gaz (12) s'étend sensiblement perpendiculairement à un plan (38) incluant le siège de soupape (32).

5. Séparateur de gaz de carter (2) selon l'une quelconque des revendications précédentes, dans lequel un mouvement de fermeture de soupape de la membrane (34) s'effectue dans une direction opposée à une direction du gaz s'écoulant dans la soupape de régulation de la pression de gaz (12).

6. Séparateur de gaz de carter (2) selon l'une quelconque des revendications précédentes, dans lequel la soupape de régulation de la pression de gaz (12) comprend un conduit de sortie de gaz (42) en aval de la membrane (34), et dans lequel le conduit de sortie de gaz (42) s'étend sensiblement parallèlement à la membrane (34).

7. Séparateur de gaz de carter (2) selon l'une quelconque des revendications précédentes, dans lequel, vu perpendiculairement à un plan général (39) de la membrane (34), un centre (46) de la membrane (34) est décalé d'un centre (48) du siège de soupape (32).

8. Séparateur de gaz de carter (2) selon les revendications 6 et 7, dans lequel le centre (46) de la membrane (34) est décalé du centre (48) du siège de soupape (32) en direction du conduit de sortie de gaz (42).

9. Séparateur de gaz de carter (2) selon l'une quelconque des revendications précédentes, dans lequel un plan (38) incluant le siège de soupape (32) et un plan (39) d'une zone de butée (44) de la membrane (34) configurée pour buter contre le siège de soupape (32) sont disposés selon un angle (α) l'un par rapport à l'autre.

10. Séparateur de gaz de carter (2) selon l'une quelconque des revendications précédentes, dans lequel la soupape de régulation de la pression de gaz (12) comprend en outre un élément de sollicitation (36) disposé pour solliciter la membrane (34) dans une direction à l'écart du siège de soupape (32).
